# EUROPÄISCHE PATENTSCHRIFT

(11) **EP 2 018 586 B1**
(45) Veröffentlichungstag und Bekanntmachung des Hinweises auf die Patenterteilung: **02.12.2015**
(21) Anmeldenummer: 07722195.0
(22) Anmeldetag: 12.04.2007
(51) Int. Cl.: G02B 21/00

(54) **VERFAHREN ZUR GENERIERUNG EINES UNIVERSELLEN PINHOLEMUSTERS ZUR ANWENDUNG IN KONFOKALMIKROSKOPEN**
METHOD FOR GENERATING A UNIVERSAL PINHOLE PATTERN FOR USE IN CONFOCAL MICROSCOPES
PROCÉDÉ POUR GÉNÉRER UN MOTIF STÉNOPÉIQUE UNIVERSEL POUR UTILISATION DANS DES MICROSCOPES CONFOCAUX

(30) Priorität: 20.04.2006 DE 102006018720
(43) Veröffentlichungstag der Anmeldung: 28.01.2009
(73) Patentinhaber: NanoFocus AG, 46149 Oberhausen (DE)
(72) Erfinder: WEBER, Mark A., 47445 Moers (DE)
(74) Vertreter: Röther, Peter
(86) Internationale Anmeldenummer: PCT/DE2007/000637
(87) Internationale Veröffentlichungsnummer: WO 2007/121706

(56) Entgegenhaltungen:
- EP-A2- 0 539 691
- US-A- 4 802 748
- US-A- 5 083 220
- TANAAMI T ET AL: "HIGH-SPEED 1-FRAME/MS SCANNING CONFOCAL MICROSCOPE WITH A MICROLENS AND NIPKOW DISKS" APPLIED OPTICS, OSA, OPTICAL SOCIETY OF AMERICA, WASHINGTON, DC, US, Bd. 41, Nr. 22, 1. August 2002 (2002-08-01), Seiten 4704-4708, XP001131422 ISSN: 0003-6935
- WILSON T ET AL: "CONFOCAL MICROSCOPY BY APERTURE CORRELATION", OPTICS LETTERS, OPTICAL SOCIETY OF AMERICA, vol. 21, no. 23, 1 December 1996 (1996-12-01), pages 1879-1881, XP000828057, ISSN: 0146-9592

## Beschreibung

Die Erfindung betrifft eine Pinholescheibe, die im Durchlichtmodus als Filterscheibe insbesondere in Konfokalmikroskopen einsetzbar ist und aus einem optisch transparenten Material mit Innenloch mit festem Aussenradius rₘₐₓ und Innenradius rₘᵢₙ besteht, wobei das optisch transparente Material zumindest in einem großen Bereich mit einer nicht transparenten Schicht versehen ist, und dieser Bereich mit einem Muster aus transparenten Pinholes versehen ist, wobei die Anordnung dieser Pinholes nach folgender Regel erzeugt ist:
a. Die Scheibe wird in n gleich dicke Kreisringe mit den Radien r₁, r₂ ...., rₙ mit konstantem radialem Abstand Δr unterteilt,
b. eine vom Scheibenursprung ausgehende Gerade schneidet alle Kreisringe mit dem Winkel αₒ,
c. in jedem Schnittpunkt der konzentrischen Kreise mit der Geraden werden die ersten Pinholes platziert,
d. der Winkel der nächsten Pinholes für jeden Kreis wird aus der Summe des letzten Winkels und eines für den Kreisradius typischen Summanden dα(rᵢ) berechnet, wobei der Winkel dα(rᵢ) = D² /(Δr x rᵢ) in Radian gerechnet wird, wodurch sämtliche Winkelpositionen der Pinholes sich nach der Formel α (rᵢ, j) = α₀ +j x dα(rᵢ) berechnen und nur Winkel zwischen 0 und 2n berücksichtigt werden, wobei gilt:
   i = Anzahl der Radien,
   D = Abstand zwischen zwei Pinholes auf dem gleichen Radius j = Anzahl der Pinholes auf einem Kreisring.

Eine derartige Pinholescheibe ist aus der EP- 0539 691 A2 bekannt.

Darüber hinaus ist aus der US A 5 083 220 eine Pinholescheibe bekannt, bei der die Pinholes dadurch erzeugt werden, dass die Anfangsbedingungen für das erste Pinhole jeder Serie auf dem ersten Kreisring nach dem Zufallsprinzip ausgewählt werden, wonach dann die folgenden Pinholes nach dem gleichen Berechnungsmuster erzeugt werden, wodurch ein Pinholemuster entsteht, bei dem die Pinholedichte von innen nach aussen geringer wird und eine mehr oder weniger symmetrische Anordnung erreicht wird. Hierdurch kann es jedoch zu Nachteilen wie beispielsweise Streifenbildung kommen.

Der Erfindung liegt die Aufgabe zugrunde, eine Pinholescheibe der eingangs genannten Art so auszugestalten, dass ein Konfokalbetrieb ohne einseitigen Intensitatsrückgang auf der Aussenseite der Pinholescheibe möglich ist sowie ein streifenarmer Betrieb auch bei Dejustierung oder Unwuchten der rotierenden Scheibe.

Die Erfindung löst diese Aufgabe mit den Merkmalen des kennzeichnenden Teils des Anspruchs 1, nämlich dadurch, dass auf dem jeweiligen Radius die Winkelkoordinaten der jeweiligen Pinholes derart verschoben werden, dass auf dem jeweiligen Radius die Winkelkoordinaten der jeweiligen Pinholes derart verschoben werden, dass zunächst über einen Zufallsgenerator ein Winkel Δα berechnet wird, der bis zu maximal einem mittleren Pinholeabstand positiv wie negativ verschieben kann, also Δα =[(-D/rᵢ)..(D/rᵢ)], wobei dieser Verschiebewinkal für jedes Pinhole neu erzeugt und zu dessen Winkelwert addiert wird, wonach als abschließender Schritt Winkelverschiebungen erfolgen, die einem Abstand für benachbarte Pinholes garantieren, der weniger als 90% des mittleren Pinhole-Abstandes betragen soll.

Das hier beschriebene Verfahren dient zur universellen Generierung eines optimierten Pinholemusters auf rotierenden Konfokalfilterscheiben. Mit Hilfe dieses Verfahrens können neuartige Lochmuster erzeugt werden, die wesentlich geringere Ansprüche an die Justage, Unwucht und Synchronisation gegenübe den bisher verwendeten Nipkowscheiben zeigen. Im Gegensatz zu den bisher eingesetzten Nipkcwscheiben bleibt die Pinholedichte über den gesamten Scheibenradius konstant. So entsteht zu einer Bildseite kein zusätzlicher Helligkeitskeil, der die Dynamik des Systems negativ beeinflussen könnte. Die Problematik verkehrter Justierung bzw. Dejustierung durch mechanische Unwucht, welche zu einem zusätzlichen Hell-Dunkel-Streifenmuster führte, konnte ebenfalls eliminiert werden. Ebenfalls die Problematik der gezielten Synchronisation zwischen Drehzahl der Scheibe und Belichtungszeit des Bildaufnahmemoduls konnte entschärft werden.

Mit der hier beschriebenen Erfindung wird erstmalig der Betrieb eines konfokalen Mikroskops ohne einseitigen Intensitätsrückgang auf der Aussenseite der Pinholescheibe ermöglicht sowie ein streifenarmer Betrieb auch bei Dejustierung oder Unwuchten der rotierenden Scheibe.

Gemäß einer vorteilhaften Ausführungsform der Erfindung gemäß Patentanspruch 2, wobei ein keilförmiger Bereich der Scheibe transparent und unstrukturiert ist und der Schnittpunkt der Keilschenkel mit dem Zentrum der Scheibe zusammenfällt, wurde ein spezieller Bereich zur Erzeugung eines nicht konfokalen Übersichtsbildes geschaffen. Darüber hinaus ergibt sich eine einfache Synchronisation auf die Belichtungszeit des Bildaufnahmemodus.

Die Erfindung wird im folgenden anhang von Zeichnungen dargestellt und erläutert.

Es zeigen:
Fig. 1) Prinzipskizze zur Grobsegmentierung der Pinholescheibe
Fig.2) Prinzipskizze zur Erzeugung der quasihomogenon Pinholedichte auf der Pinholescheibe
Fig.3) Prinzipskizze zur Brechung von Symmetrien und Einhaltung des Mindestabstands von Pinholemustern auf der Pinholescheibe.

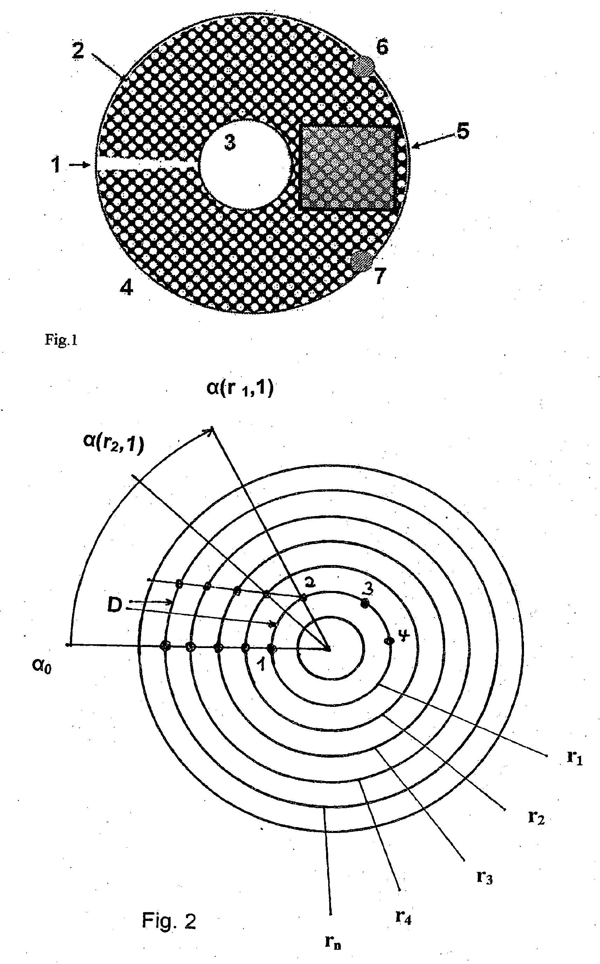

Fig. 1 zeigt die Prinzipskizze zur Grobsegmentierung einer im Durchlichtmodus arbeitenden Pinholescheibe. Die Scheibe besteht aus einem rund zugeschnittenen optisch transparenten Material mit Innenloch mit festem Außenradius rₘₐₓ (4) und Innenradius rₘᵢₙ (3). Das optisch transparente Material ist mit einer nicht transparenten (ND>3), speziell strukturieren Schicht versehen. Die Struktur ist neben Markierungen, wie z.B. Winkel, Produktnummer und Firmenname, in zwei Segmente unterteilt: 1.) Ein dreleckiger transparenter Keil (1) mit einer Ecke im Mittelpunkt der Scheibe zur Ermöglichung eines mikroskopischen Übersichtsbildes. 2.) Der Rest der Scheibe ist mit einem quasihomogenen Pinholemuster aus transparenten Pinholes versehen. Dabei soll zunächst ein deterministisches Pinholemuster (2) mit garantierten Mindestabständen benachbarter Pinholes erzeugt werden, welches einem geeigneten stochastischen Diffusionsprozess unterwerfen wird und anschließend zur Einhaltung eines garantiert Abstandes zwischen benachbarten Pinholes geeignet korrigiert wird.

Die Scheibe rotiert um ihren Mittelpunkt. Durch den zu beobachtenden Bildbereich (5) bewegt sich sowohl der transparente Keil für den Mikroskop-Übersichtsmodus, als auch das Pinholemuster. Durch zwei Gabellichtschranken (6) und (7) kann der Zeitpunkt detektiert werden, wenn der transparente Keil in die Bildfläche gelangt und diese wieder verlässt. Ohne Beschränkung der Allgemeinheit gebe Lichtschranke (6) einen Impuls, kurz bevor der transparente Keil in das Bildfeld gelangt und Lichtschranke (7) einen Impuls, wenn der transparente Keil den Bildbereich verlässt. Wenn die Belichtung des Bildsensors zum Zeitpunkt (6) beginnt und zum Zeitpunkt (7) endet, kann ein Übersichtsbild erzeugt werden. Wird die Belichtung zum Zeitpunkt (7) gestartet und zum Zeitpunkt (6) beendet, wird ein Konfokalbild aufgenommen. Wird die Belichtungsdauer von Zeitpunkt (6) bis zum nächsten Impuls von (6) gewählt, kann ein Kombinationsbild aus Konfokal- und Übersichtsmodus aufgenommen werden. Das funktioniert auch, wenn Puls (7) verwendet wird. Insbesondere für steile Flanken und sehr lichtschwache Proben sollte dieses Vorgehen eine wesentlich bessere Performance als bisherige Verfahren haben.

Fig. 2 zeigt eine Prinzipskizze zur Erzeugung der quasihomogenen Punktdichte auf der Pinholescheibe. Zur Erzeugung des Grundmusters wird zur Vereinfachung in Zylinderkoordinaten gerechnet und die gesamte Scheibe in n gleichdicke Kreisringe mit den Radien r₁,r₂,r₃,...,rₙ mit konstantem radialen Abstand Δr=(rₘₐₓ-rₘᵢₙ(n-1) unterteilt. Die Kreisringe haben ihren Mittelpunkt im Ursprung. Eine vom Ursprung ausgehende Gerade schneidet sämtliche Kreisringe bei dem Winkel α₀. In jedem Schnittpunkt zwischen den konzentrischen Kreisen und der Halbgerade wird für jeden Kreis das erste Pinhole platziert. Der Winkel des folgenden Pinholezentrums für jeden Kreis berechnet sich aus der Summe des letzten Winkels und einem für den Kreisradius typischen Summanden dα(xᵢ). Der Winkel dα(rᵢ) wird in Radian berechnet und ergibt sich zu dα(rᵢ) = D² / (Δr • rᵢ). Sämtliche Winkelpositionen der Pinholes berechnen sich nach der Formel α(r_{i,j}) = α₀+j. dα(rᵢ, wobei nur Winkel zwischen 0 und 2π berücksichtigt werden. Hiermit ist die Grundgeometrie für eine quasihomogene Verteilung der Pinholes geschaffen. Die Zahl der auf den einzelnen Kreisen verteilten Pinholes steigt dabei kontinuierlich ganzzahlig mit dem Kreisradius an und kann keine lokalen Minima aufweisen.

Der Abstand zwischen jeweils zwei benachbarten Pinholes auf einem Kreis ist auf den Kreisen von außen nach innen immer konstant, so dass die Verbindungslinie der zu α₀ benachbarten Pinholes leicht gekrümmt ist.

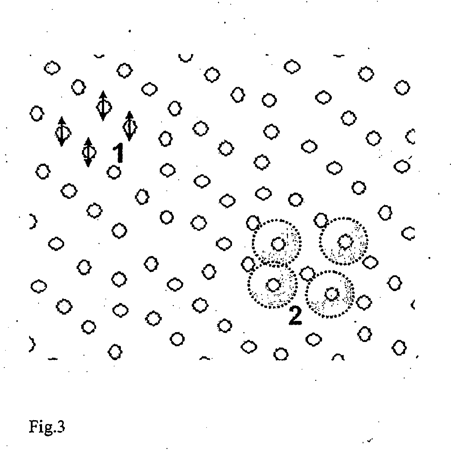

Fig. 3 zeigt die Prinzipskizze zur Brechung der Symmetrie und zur Einhaltung eines bestimmten Abstandes zwischen benachbarten Pinholes. Dabei wird in keinem Fall eine Veränderung des Radius durchgeführt. Es werden nur Winkelkoordinaten verschoben. (1) zeigt die Möglichkeiten zur Winkel Verschiebung der Pinholes. Dabei wird über einen Zufallsgenerator ein Winkel Δα berechnet, der bis zu maximal einen mittleren Pinholeabstand positiv wie negativ verschieben kann, also Δα = [(-D /rᵢ). (D/rᵢ)]. Dieser Verschiebewinkel wird für jedes Pinhole neu erzeugt und zu dessen Winkelwert addiert. Als abschließender Schritt erfolgen Winkelverschiebungen, die einen Abstand für benachbarte Pinholes garantieren sollen (2). Dabei sollte der Abstand weniger als 90% des durchschnittlichen Abstandes betragen, um die Anzahl notwendiger Verschiebungen zu reduzieren und die maximal notwendigen Verschiebewinkel zu reduzieren.

## Patentansprüche

1. Pinholescheibe, die im Durchlichtmodus als Filterscheibe insbesondere in Konfokalmikroskopen einsetzbar ist und aus einem optisch transparenten Material mit Innenloch mit festem Aussenradius rₘₐₓ und Innenradius rₘᵢₙ besteht, wobei das optisch transparente Material zumindest in einem großen Bereich mit einer nicht transparenten Schicht versehen ist, und dieser Bereich mit einem Muster aus transparenten Pinholes versehen ist, wobei die Anordnung dieser Pinholes nach folgender Regel erzeugt ist:
a. Die Scheibe wird in n gleich dicke Kreisringe mit den Radien r₁, r₂ .... , rₙ mit konstantem radialem Abstand Δr unterteilt,
b. eine vom Scheibenursprung ausgehende Gerade schneidet alle Kreisringe mit dem Winkel αₒ,
c. in jedem Schnittpunkt der konzentrischen Kreise mit der Geraden werden die ersten Pinholes platziert,
d. der Winkel der nächsten Pinholes für jeden Kreis wird aus der Summe des letzten Winkels und eines für den Kreisradius typischen Summanden dα(rᵢ) berechnet, wobei der Winkel dα (rᵢ) = D² / (Δr x rᵢ) in Radian gerechnet wird, wodurch sämtliche Winkelpositionen der Pinholes sich nach der Formel α (rᵢ, j) = α₀ +j x dα (rᵢ) berechnen und nur Winkel zwischen 0 und 2n berücksichtigt werden, wobei gilt:
i = Anzahl der Radien,
D = Abstand zwischen zwei Pinholes auf dem gleichen Radius
j = Anzahl der Pinholes auf einem Kreisring,
**dadurch gekennzeichnet, dass** auf dem jeweiligen Radius die Winkelkoordinaten der jeweiligen Pinholes derart verschoben werden, dass zunächst über einen Zufallsgenerator ein Winkel Δα berechnet wird, der bis zu maximal einem mittleren Pinholeabstand positiv wie negativ verschieben kann, also Δα = [(-D/rᵢ) .. (D/rᵢ)], wobei dieser Verschiebewinkel for jedes Pinhole neu erzeugt und zu dessen Winkelwert addiert wird, wonach als abschließender Schritt Winkelverschiebungen erfolgen, die einen Abstand für benachbarte Pinholes garantieren, der weniger als 90% dies mittleren Pinhole- Abstandes betragen soll.

2. Pinholescheibe nach Anspruch 1, **dadurch gekennzeichnet, dass** ein keilförmiger Bereich der Scheibe transparent und unstrukturiert ist und der Schnittpunkt der Keilschenkel mit dem Zentrum der Scheibe zusammenfällt.

3. Pinholescheibe nach Anspruch 2, ***dadurch* gekennzeichnet, dass** zwei Gabellichtschranken (6, 7) vorgesehen sind, die impulsmäßig mit einem Bildsensor des Mikroskops verbunden und für die Detektion des Keildurchlaufs vorgesehen sind.

## Claims

1. Pinhole disc, which in transmitted light mode can be used as a filter disc especially in confocal microscopes and consists of an optically transparent material with inner hole with fixed outer radius rₘₐₓ and inner radius rₘᵢₙ, wherein the optically transparent material is provided at least in one large area with a non-transparent layer, and this area is provided with a pattern of transparent pinholes, wherein the arrangement of these pinholes is generated according to the following rule:
a. the disc is divided into n equally thick circular rings with the radii r₁, r₂ ...., rₙ with constant radial spacing Δr,
b. a straight line starting out from the disc origin intersects all circular rings at the angle αₒ,
c. the first pinholes are placed at each point of intersection of the concentric circles with the straight line,
d. the angle of the next pinholes for each circle is calculated from the sum of the last angle and of a summand dα(r₁) typical of the circle radius, wherein the angle dα(r₁) = D² / (Δr x rᵢ) is calculated in radians, due to which all angular positions of the pinholes are calculated according to the formula α(r₁, j) = αₒ + j x dα(r₁) and only angles between 0 and 2π are taken into consideration, wherein the following applies:
i = number of radii,
D = distance between two pinholes on the same radius,
j = number of pinholes on a circular ring,
**characterised in that** on the respective radius the angular coordinates of the respective pinholes are displaced in such a way that an angle Δα is first calculated via a random generator, which angle can move up to a maximum of a mean pinhole distance positively and negatively, thus Δα = [-D/rᵢ)..(D/r₁)], wherein this displacement angle is generated afresh for each pinhole and is added to its angular value, whereupon as a concluding step angular displacements take place that guarantee a distance for adjacent pinholes that should be less than 90% of the mean pinhole distance.

2. Pinhole disc according to claim 1, **characterised in that** a wedge-shaped area of the disc is transparent and unstructured and the point of intersection of the wedge limbs coincides with the centre of the disc.

3. Pinhole disc according to claim 2, **characterised in that** two forked light barriers (6, 7) are provided, which are connected in a pulse-like manner to an image sensor of the microscope and are provided for the detection of the wedge passage.

## Revendications

1. Rondelle de sténopés qui peut être utilisée comme rondelle de filtrage en mode de transmission de la lumière, en particulier dans des microscopes confocaux, et qui est en un matériau optiquement transparent, avec un trou interne, avec un rayon extérieur rₘₐₓ fixe et un rayon intérieur rₘᵢₙ, le matériau optiquement transparent étant muni, au moins dans une grande zone, d'une couche non transparente et cette zone étant munie d'un motif de sténopés transparents, la disposition de ces sténopés étant générée selon les règles suivantes :
a. la rondelle est divisée en n anneaux circulaires de même épaisseur, avec les rayons r1, r₂, ..., rₙ avec une distance Δr constante,
b. une droite issue de l'origine de la rondelle coupe tous les anneaux circulaires avec l'angle αₒ,
c. les premiers sténopés sont positionnés à chaque point d'intersection des cercles concentriques avec la droite,
d. l'angle des sténopés suivants pour chaque cercle est calculé à partir de la somme du dernier angle, et d'un terme de somme dα(rᵢ) typique du rayon du cercle, l'angle dα(rᵢ) = D² / (Δr x rᵢ) étant calculé en radians, moyennant quoi toutes les positions angulaires des sténopés sont calculées selon la formule α (rᵢ, j) = αₒ + j x dα (rᵢ) et seuls les angle compris entre 0 et 2n étant pris en compte, où :
i = le nombre des rayons,
D = la distance entre deux sténopés sur le même rayon,
j = le nombre des sténopés sur un anneau circulaire,
**caractérisée en ce que**, les coordonnées angulaires des sténopés respectifs sur le rayon respectif sont décalées de telle manière qu'un angle Δα soit d'abord calculé par l'intermédiaire d'un générateur aléatoire, angle qui peut être décalé dans le sens positif ou négatif au maximum d'une moitié de la distance entre les sténopés, donc de Δα = [(-D/rᵢ) ... (D/rᵢ)], cet angle de décalage étant généré à nouveau pour chaque sténopé et ajouté à cette valeur d'angle, une étape finale de décalages angulaires ayant ensuite lieu, qui garantissent une distance pour des sténopés voisins, qui doit être inférieure à 90% de la distance moyenne des sténopés.

2. Rondelle de sténopés selon la revendication 1, **caractérisée en ce qu'**une zone en forme de coin de la rondelle est transparente et non structurée et **en ce que** le point d'intersection entre les côtés du coin coïncide avec le centre de la rondelle.

3. Rondelle de sténopés selon la revendication 2, **caractérisée en ce que** deux cellules de détection à faisceau direct (6, 7) sont prévues, qui sont reliées par impulsions avec un capteur d'image du microscope et qui sont prévues pour la détection du passage du coin.
